# FASCICULE DE BREVET EUROPEEN

(11) **EP 0 757 661 B1**
(45) Date de publication et mention de la délivrance du brevet: **14.08.2002**
(21) Numéro de dépôt: 96902311.8
(22) Date de dépôt: 30.01.1996
(51) Int. Cl.: C01B 15/023

(54) **PROCEDE ET INSTALLATION DE PRODUCTION DE PEROXYDE D'HYDROGENE**
VERFAHREN UND VORRICHTUNG ZUR HERSTELLUNG VON WASSERSTOFFPEROXID
METHOD AND PLANT FOR PRODUCING HYDROGEN PEROXIDE

(30) Priorité: 28.02.1995 FR 9502316
(43) Date de publication de la demande: 12.02.1997
(73) Titulaire: Atofina, 92800 Puteaux (FR)
(72) Inventeur: LEDON, Henry, F-78000 Versailles (FR)
(86) Numéro de dépôt international: FR9600158
(87) Numéro de publication internationale: WO9626896

(56) Documents cités:
- US-A- 2 902 347
- US-A- 3 880 596
- R. H. PERRY, D. GREEN: "Perry's Chemical Engineers' Handbook" 1984 , MCGRAW-HILL , NEW YORK, USA XP002002247 voir page 18-25 - page 18-29

## Description

La présente invention est relative à un procédé de production de peroxyde d'hydrogène selon la technique d'auto-oxydation d'un dérivé anthraquinonique, du type comprenant :
- une étape (a) d'hydrogénation catalytique, dans un hydrogénateur, d'une solution de travail contenant au moins un dérivé anthraquinonique en solution dans au moins un solvant organique ;
- après filtration de la solution de travail hydrogénée, une étape (b) d'oxydation, dans un oxydeur, de cette solution de travail hydrogénée au moyen d'un fluide contenant de l'oxygène, notamment au moyen d'air;
- une étape (c) de séparation par de l'eau, dans un extracteur, du peroxyde d'hydrogène et de la solution de travail oxydée ; et
- une étape (d) de recyclage vers l'hydrogénateur de la solution de travail oxydée est récupérée à l'étape (c).

Dans ce qui suit, les pressions indiquées sont des pressions relatives (ou surpressions).

Un procédé tel que décrit ci-dessus est classiquement mis en oeuvre dans des installations destinées à la production de solutions de peroxyde d'hydrogène marchandes. Pour des raisons économiques (cf. Process Economic Report N° 68B, Hydrogen Peroxide, Marc 1992, chapitre VI, SRI international) essentiellement liées aux coûts de transport et de stockage, ces solutions doivent présenter une concentration en peroxyde d'hydrogène la plus élevée possible, soit une concentration supérieure à 35%, plus généralement une concentration de 60% ou 70% en poids.

En vue de préparer ces solutions de peroxyde d'hydrogène marchandes concentrées, on procède de sorte à récupérer à la sortie de l'extracteur (étape (c)), une solution ayant une concentration en peroxyde d'hydrogène la plus élevée possible, tout en restant en dehors du domaine d'explosivité des mélanges solutions de travail/solutions aqueuses de peroxyde d'hydrogène. A cet égard, la demande de brevet FR-A-2 228 717 indique que la concentration en peroxyde d'hydrogène de ladite solution aqueuse sortant de l'extracteur ne doit pas être supérieure à 600 g/l, soit 50% en poids de peroxyde d'hydrogène. Une concentration en peroxyde d'hydrogène supérieure à cette valeur est décrite comme pouvant entraîner des réactions explosives.

Pour obtenir des solutions aqueuses de peroxyde d'hydrogène fortement concentrées, on adapte les paramètres de fonctionnement du procédé d'auto-oxydation mentionné ci-dessus de façon à permettre la mise en oeuvre d'une solution de travail ayant un équivalent peroxyde d'hydrogène aussi élevé que possible, par exemple un équivalent peroxyde d'hydrogène supérieur à 11 g/l, voire plus. Ainsi, la demande de brevet FR-A-2 086 166 préconise la mise en oeuvre d'une solution de travail pouvant produire, après oxydation, une quantité de peroxyde d'hydrogène de l'ordre de 16g/ litre de solution de travail. Un tel procédé classique mettant en oeuvre un équivalent peroxyde d'hydrogène élevé présente cependant de nombreux inconvénients. Ainsi, ce procédé classique requiert généralement la mise en oeuvre de températures d'hydrogénation (étape (a)) et d'oxydation (étape (b)) élevées. A cet égard, on peut se référer à "Techniques de l'Ingénieur, chapitre "Peroxyde d'hydrogène", J 6 020, qui mentionne que les températures d'hydrogénation et d'oxydation doivent être comprises entre 60 et 80°C.

Un autre inconvénient rencontré par la mise en oeuvre dudit procédé classique est que la solution de travail se dégrade rapidement.

En outre, ce procédé classique est très sensible à la présence d'eau, même en faible quantité, qui peut s'introduire accidentellement soit dans l'oxydeur, soit dans les conduites reliant l'oxydeur et l'extracteur. A ce niveau, l'eau réagit avec la solution de travail oxydée, ce qui peut provoquer des réactions explosives.

La présente invention a pour but d'obvier aux inconvénients mentionnés ci-dessus.

Plus particulièrement, l'invention a pour but de fournir un procédé de production de peroxyde d'hydrogène selon la technique d'auto-oxydation comprenant les étapes (a) à (d) décrites ci-dessus, qui soit particulièrement bien adapté, du point de vue de l'investissement, du coût de fonctionnement et de la sécurité, dans les conditions industrielles réelles, à la production sur le site de peroxyde d'hydrogène directement utilisable dans certaines installations consommatrices telles que les installations de fabrication de pâtes à papier.

A cet effet, l'invention a pour objet un procédé du type précité, caractérisé en ce que :
- on conduit l'étape (a) d'hydrogénation de manière à obtenir à l'entrée de l'oxydeur (2) un équivalent peroxyde d'hydrogène compris entre 7 et 9 g/l environ, et
- on conduit l'étape (b) d'oxydation à contre-courant et à une température qui, au sommet de l'oxydeur (2), est inférieure 50°C environ, et de préférence comprise entre 35 et 40°C environ,
- on utilise dans l'oxydeur (2) des moyens de contact gaz-liquide constitués au moins en partie par un garnissage ondulé-croisé, comprenant un paquet de lamelles ayant une forme générale rectangulaire et ondulées en oblique, le sens d'inclinaison des ondes étant inversé d'une lamelle à la suivante,
- et on produit par l'étape (c) une solution de peroxyde d'hydrogène dans l'eau à une concentration en peroxyde d'hydrogène inférieure à 15 % en poids.

Ce procédé peut comporter une ou plusieurs des caractéristiques suivantes :
- on conduit l'étape (b) d'oxydation à une pression, dans le ciel gazeux de l'oxydeur, comprise entre 1 et 10 bars environ, de préférence entre 2 et 4 bars environ,
- on conduit l'étape (a) d'hydrogénation à une température comprise entre 50 et 70°C environ,
- on conduit l'étape (a) d'hydrogénation à une pression, dans le ciel gazeux de l'hydrogénateur, comprise entre 0,5 et 4 bars environ, de préférence entre 0,8 et 1,5 bar environ,
- on utilise en outre dans l'oxydeur des moyens de contact gaz-liquide constitués par des plateaux analogues à des plateaux de distillation,
- on produit par l'étape (c) une solution de peroxyde d'hydrogène dans l'eau à une concentration en peroxyde d'hydrogène comprise entre 5 et 12% en poids;
- l'étape d'oxydation s'effectue à contre-courant.

Le procédé selon l'invention peut être mis en oeuvre dans l'installation suivante.

Suivant un premier mode de réalisation, cette installation, du type comprenant un hydrogénateur catalytique alimenté en hydrogène ; un oxydeur alimenté en un fluide contenant de l'oxygène, notamment en air ; un extracteur alimenté en eau ; et des moyens pour faire passer une solution de travail, contenant au moins un dérivé anthraquinonique en solution dans au moins un solvant organique, successivement dans l'hydrogénateur, dans l'oxydeur et dans l'extracteur, puis la recycler vers l'hydrogénateur, est caractérisée en ce que l'oxydeur comprend une enveloppe contenant des moyens de contact gaz-liquide constitués au moins en partie par un garnissage organisé, notamment par un garnissage ondulé-croisé.

Suivant un deuxième mode de réalisation, l'installation, du type comprenant un hydrogénateur catalytique alimenté en hydrogène ; un oxydeur alimenté en un fluide contenant de l'oxygène, notamment en air ; un extracteur alimenté en eau ; et des moyens pour faire passer une solution de travail, contenant au moins un dérivé anthraquinonique en solution dans au moins un solvant organique, successivement dans l'hydrogénateur dans l'oxydeur et dans l'extracteur, puis la recycler vers l'hydrogénateur, est caractérisée en ce que l'oxydeur comprend une enveloppe contenant des moyens de contact gaz-liquide constitués au moins en partie par des plateaux perforés simples ou des plateaux analogues à des plateaux de distillation.

Des exemples de mise en oeuvre de l'invention vont maintenant être décrits en regard des dessins annexés, sur lesquels :
- la Figure 1 représente schématiquement une installation de production de peroxyde d'hydrogène conforme à l'invention ;
- la Figure 2 représente schématiquement en perspective l'agencement général d'une partie de l'oxydeur équipée d'un garnissage ondulé-croisé ; et
- la Figure 3 représente en perspective éclatée la constitution d'un élément du garnissage de la Figure 2.

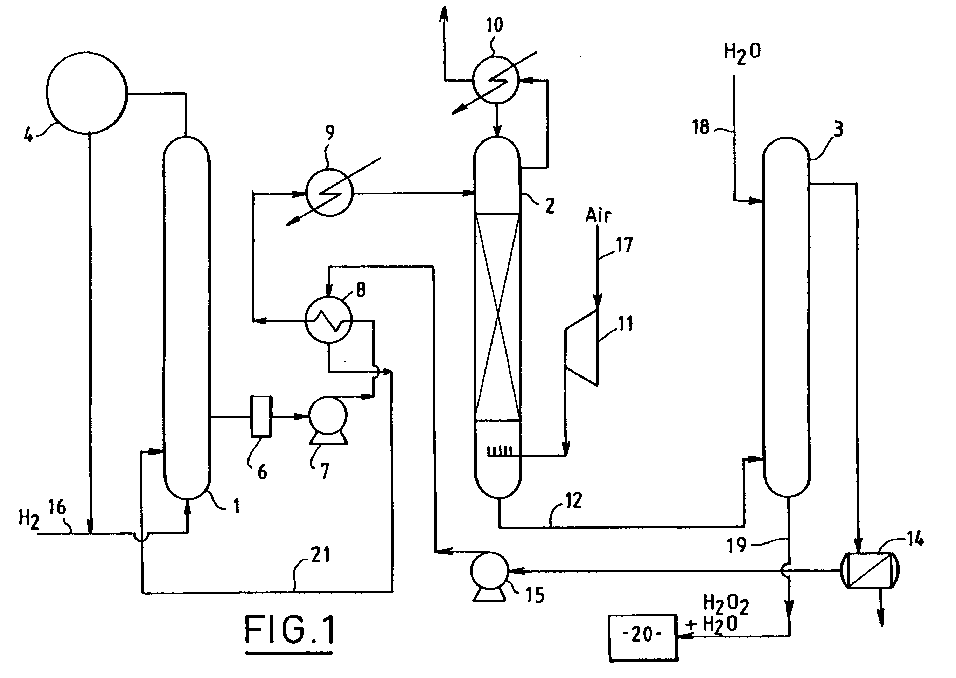

L'installation représentée à la Figure 1 comprend trois appareils principaux en forme de colonnes: un hydrogénateur catalytique 1, un oxydeur à contre-courant 2, et un extracteur à eau 3. Elle comporte également de nombreux équipements associés à ces trois appareils, dont seuls certains ont été représentés : un ensemble surpresseur-condenseur 4 de recirculation du mélange gazeux contenant l'hydrogène, associé à l'hydrogénateur ; un filtre 6, une pompe 7, un échangeur de chaleur 8, un réfrigérant à eau 9, un condenseur de tête 10 et un compresseur d'air 11 associés à l'oxydeur; une conduite 12, aussi courte que possible, reliant la base de l'oxydeur 2 à celle de l'extracteur 3; et un coalesceur 14 et une pompe 15 pour le recyclage de la solution de travail.

On a également représenté sur la Figure 1 une conduite 16 d'alimentation de l'hydrogénateur en hydrogène d'appoint, une conduite 17 d'alimentation en air du compresseur 11, une conduite 18 d'alimentation de l'extracteur 3 en eau déminéralisée, une conduite 19 de production de peroxyde d'hydrogène, qui part de la base de l'extracteur 3 et aboutit à une installation 20 consommatrice de peroxyde d'hydrogène sous la même concentration, et une conduite 21 de recyclage de la solution de travail.

L'installation 20, qui se trouve sur le même site que l'installation de production de peroxyde d'hydrogène, peut notamment être une installation de blanchiment de pâte à papier.

L'installation de production de peroxyde d'hydrogène comprend de nombreux autres équipements bien connus dans la technique et non représentés, tels que des moyens de régénération de produits dégradés de la solution de travail, de mise en oeuvre du catalyseur, de récupération de solvant, etc.

En fonctionnement, la solution de travail, constituée d'au moins un dérivé anthraquinonique et d'au moins un solvant organique, est introduite à la base de l'hydrogénateur 1 via la conduite de recyclage 21 reliée au refoulement de la pompe 15, et un courant de gaz contenant de l'hydrogène est également introduit à la base de l'hydrogénateur. Ce courant gazeux est constitué d'une part du courant gazeux soutiré au sommet de l'hydrogénateur, recirculé par l'ensemble surpresseur-condenseur 4, et d'autre part d'hydrogène d'appoint arrivant via la conduite 16.

La solution de travail est ainsi partiellement réduite. La solution réduite, soutirée de la base de l'hydrogénateur par la pompe 7 via le filtre 6, contient donc des dérivés hydroquinoniques ( par exemple 80% de tétrahydroanthrahydroquinone et 20% d'anthrahydroquinone).

Le dérivé anthraquinonique constitutif de la solution de travail est choisi de préférence parmi les 2-alkyl-9,10-anthraquinones dans lesquelles le substituant alkyle comprend de 1 à 5 atomes de carbone, tel que les radicaux méthyle, éthyle, sec-butyle, tertio-butyle, tertio-amyle, iso-amyle, ainsi que les dérivés tétrahydro-5,6,7,8 correspondants, ou parmi les dialkyl-9,10-anthraquinones dans lesquelles les substituants alkyle, identiques ou différents, comprennent de 1 à 5 atomes de carbone, tel que les radicaux méthyle, éthyle, tertio-butyle, par exemple 1,3 diméthyle, 1,4 diméthyle, 2,7-diméthyle, 1,3-diéthyle, 2,7-di(tertio-butyle), 2 éthyl-6-(tertio-butyle) et les dérivés tétrahydro-5,6,7,8 correspondants. Le solvant organique constitutif de la solution de travail est de préférence un mélange d'un composé non polaire et d'un composé polaire. Le composé non polaire est choisi de préférence parmi les coupes pétrolières à point d'ébullition supérieur à 140°C contenant majoritairement des hydrocarbures aromatiques comportant au moins 9 atomes de carbone, tel que les isomères du triméthylbenzène, les isomères du tétraméthylbenzène, le (tertio-butyl)benzène, les isomères du méthylnaphtalène, les isomères du diméthylnaphtalène. Le composé non polaire est choisi de préférence parmi les alcools saturés comportant de préférence de 7 à 11 atomes de carbone, tels que le di(iso-butyl)carbinol, le triméthyl-3,5,5-hexanol, l'iso-heptanol, les esters d'acides carboxyliques tels que l'acétate de méthylcyclohexyle commercialisé sous le nom de "Sextate", l'acétate d'heptyle, le benzoate de butyle, l'heptanoate d'éthyle, les esters de l'acide phosphorique tels que le phosphate de tributyle, le phosphate de tri(2-éthylbutyle), le phosphate de tri(2-éthyl-hexyle), le phosphate de tri(n-octyle) et les urées tétrasubstituées telle que la tétra(n-butyl)urée.

Par "équivalent peroxyde d'hydrogène", on entend la quantité de peroxyde d'hydrogène, exprimée en grammes, qu'un litre de solution de travail est susceptible de fournir à l'issue de l'étape d'oxydation si le rendement de cette étape dans l'oxydeur 2 est de 100%. Cette concentration massique potentielle en peroxyde correspond à une concentration molaire qui est égale à la concentration molaire de l'ensemble des formes anthrahydroquinoniques réoxydables dans la solution de travail. Il dépend d'une part de la concentration en formes anthraquinoniques de la solution de travail de départ, et d'autre part des conditions d'hydrogénation en 1.

Dans le cas présent, on effectue l'hydrogénation à une température comprise entre 50 et 70°C, avec une pression dans le ciel gazeux de l'hydrogénateur (pression qui régule le débit d'hydrogène) de 0,8 à 1,5 bar environ, et on règle l'équivalent peroxyde d'hydrogène à une valeur comprise entre 7 et 9 g/l environ, par ajustement du temps de séjour dans l'hydrogénateur, pour une concentration donnée en formes anthraquinoniques.

La solution de travail réduite soutirée de l'hydrogénateur est filtrée en 6 pour éliminer toute trace de catalyseur, puis refroidie en 8 puis en 9 jusqu'à une température de l'ordre de 35 à 40°C. La pression du ciel gazeux de l'oxydeur est maintenue à une valeur comprise entre 2 et 4 bars. La solution de travail réduite est ainsi oxydée en 2, le fluide de tête de l'oxydeur étant partiellement condensé en 10.

Le peroxyde d'hydrogène formé par la réaction d'oxydation est soutiré de la base de l'oxydeur, dans une quantité égale au produit de l'équivalent peroxyde d'hydrogène précité par le rendement de l'oxydeur, en mélange avec la solution de travail de nouveau oxydée. Ce liquide est envoyé directement via la conduite 12, grâce à la différence de pression motrice, à la base de l'extracteur 3, lequel fonctionne un peu au-dessus de la pression atmosphérique. Dans l'extracteur s'effectue une extraction liquide-liquide au moyen de l'eau déminéralisée introduite au sommet de l'extracteur.

On soutire de la base de ce dernier une solution eau-peroxyde d'hydrogène, dont la concentration en peroxyde d'hydrogène est réglée sur la valeur nécessaire pour son utilisation directe dans l'installation consommatrice 20. Dans l'exemple considéré, où l'installation 20 est une installation de blanchiment de pâte à papier, la concentration en peroxyde d'hydrogène est choisie inférieure à 15 % en poids, par exemple comprise entre 5 et 12 % en poids.

La solution de travail séparée du peroxyde d'hydrogène est soutirée du sommet de l'extracteur 3, débarrassée des gouttelettes de phase aqueuse qu'elle a entraînées dans le coalesceur 14, puis envoyée par la pompe 15 à l'échangeur de chaleur 8, dans lequel elle se réchauffe, et, de là, recyclée à la base de l'hydrogénateur 1.

L'oxydeur 2 comporte une enveloppe extérieure contenant un garnissage organisé, ou des plateaux perforés simples ou des plateaux du type des plateaux de distillation, c'est-à-dire avec chacun une garde de liquide, des orifices de bullage du gaz montant à travers cette garde, et des moyens de descente du liquide d'un plateau au suivant, ou encore une combinaison d'un garnissage organisé et de tels plateaux.

Le garnissage organisé, s'il existe, est de préférence du type dit "ondulé-croisé".

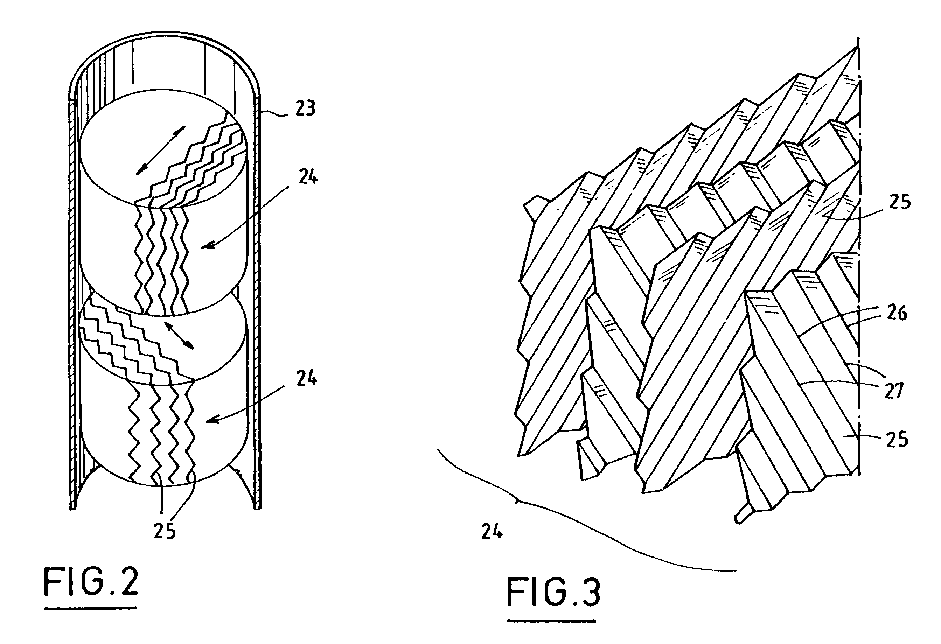

La figure 2 illustre l'agencement général de la partie courante de l'oxydeur contenant un tel garnissage. Cette partie courante comprend essentiellement une virole cylindrique 23 dans laquelle sont empilés des éléments de garnissage 24 de forme générale cylindrique.

Chaque élément 24, du type "ondulé-croisé", comprend un paquet de lamelles 25 ayant une forme générale rectangulaire et ondulées en oblique, les ondes ayant de préférence un profil triangulaire. Le sens d'inclinaison des ondes est inversé d'une lamelle à la suivante, comme on le voit bien à la figure 3.

Toutes les lamelles d'un même élément sont disposées dans des plans verticaux parallèles et ont la même hauteur. Par contre, leur longueur, ou dimension horizontale, croît d'une valeur minimale, pour une lamelle extrême, à une valeur maximale pour la lamelle médiane, puis décroît de nouveau jusqu'à la même valeur minimale, pour l'autre lamelle extrême. Ainsi, lorsque toutes les lamelles sont pressées les unes contre les autres, on obtient un élément 24 de forme générale cylindrique dont le contour a été indiqué sur la figure 2.

Sur chaque face, chaque lamelle comporte des sommets d'ondes 26 et des creux d'ondes 27 définissant une multitude de canaux inclinés.

Les sommets d'onde d'une face d'une lamelle touchent ceux de la face en regard de la lamelle adjacente, en formant une multitude de points de croisement ; ces derniers favorisent la distribution et la mise en contact des fluides. De plus, dans le même but, chaque élément 24 est décalé angulairement de 90° par rapport au suivant, comme on le voit sur la figure 2, et chaque lamelle comporte une multitude de perforations, non représentées.

Bien qu'un tel garnissage "ondulé-croisé" soit relativement peu performant du point de vue de la division du gaz montant en fines bulles, il convient dans le procédé décrit, du point de vue de l'échange gaz-liquide comme de celui de la sécurité. En effet, du fait que l'oxydeur travaille dans une gamme de températures (35 à 40°C environ au sommet, 45 à 50°C environ à la base) nettement inférieure à la gamme de températures habituelles dans les installations de production de peroxyde d'hydrogène qui fonctionnent selon la technique d'auto-oxydation d'un dérivé anthraquinonique, le risque d'explosion dans l'oxydeur par contact d'oxygène avec des vapeurs de solvant est considérablement réduit, même à la base de l'oxydeur.

L'avantage essentiel qui résulte de l'utilisation d'un tel garnissage ondulé-croisé réside dans le fait qu'il a beaucoup moins tendance à retenir les impuretés solides que les garnissages vrac (par exemple à anneaux de Raschig) habituellement utilisés dans l'oxydeur. Par suite, lors d'un redémarrage, il y a beaucoup moins de risque de faire pénétrer brusquement dans l'extracteur une quantité relativement importante de particules, notamment métalliques, qui seraient dangereuses à ce stade du procédé.

Les remarques ci-dessus s'appliquent également à l'utilisation de plateaux favorisant le contact gaz-liquide dans l'oxydeur 2.

Il faut noter en outre que, pour une même efficacité, les garnissages "ondulé-croisé" comme les plateaux occupent un volume moindre que les garnissages vrac, ce qui permet de réduire les dimensions de l'oxydeur. De plus, dans le cas des plateaux, on peut optimiser la réaction à chaque niveau de l'oxydeur par un choix judicieux des écartements entre les plateaux.

La température relativement basse d'oxydation apporte par ailleurs, comme autre avantage, la possibilité d'utiliser dans l'oxydeur de l'air enrichi, voire de l'oxygène pur, en toute sécurité, afin de diminuer le temps de séjour de la solution dans l'oxydeur. En effet, lorsque le temps de séjour est plus bref, les dimensions de l'appareil peuvent encore être réduites, et la quantité de produits dégradés de la solution de travail est abaissée.

## Revendications

1. Procédé de production de peroxyde d'hydrogène selon la technique d'auto-oxydation d'un dérivé anthraquinonique, du type comprenant :
- une étape (a) d'hydrogénation catalytique, dans un hydrogénateur (1), d'une solution de travail contenant au moins un dérivé anthraquinonique en solution dans au moins un solvant organique ;
- après filtration (en 6) de la solution de travail hydrogénée, une étape (b) d'oxydation, dans un oxydeur (2), de cette solution de travail hydrogénée au moyen d'un fluide contenant de l'oxygène, notamment au moyen d'air ;
- une étape (c) de séparation par de l'eau, dans un extracteur (3), du peroxyde d'hydrogène et de la solution de travail oxydée ; et
- une étape (d) de recyclage vers l'hydrogénateur de la solution de travail oxydée récupérée à l'étape (c) ;
**caractérisé en ce que** :
- on conduit l'étape (a) d'hydrogénation de manière à obtenir à l'entrée de l'oxydeur (2) un équivalent peroxyde d'hydrogène compris entre 7 et 9 g/l environ, et
- on conduit l'étape (b) d'oxydation à contre-courant et à une température qui, au sommet de l'oxydeur (2), est inférieure à 50°C environ, et de préférence comprise entre 35 et 40°C environ,
- on utilise dans l'oxydeur (2) des moyens de contact gaz-liquide constitués au moins en partie par un garnissage ondulé-croisé, comprenant un paquet de lamelles ayant une forme générale rectangulaire et ondulées en oblique, le sens d'inclinaison des ondes étant inversé d'une lamelle à la suivante,
- et on produit par l'étape (c) une solution de peroxyde d'hydrogène dans l'eau à une concentration en peroxyde d'hydrogène inférieure à 15 % en poids.

2. Procédé suivant la revendication 1, **caractérisé en ce qu'**on conduit l'étape (b) d'oxydation à une pression, dans le ciel gazeux de l'oxydeur (2) comprise entre 1 et 10 bars environ, de préférence entre 2 et 4 bars environ.

3. Procédé selon la revendication 1 ou 2, **caractérisé en ce qu'**on conduit l'étape (a) d'hydrogénation à une température comprise entre 50 et 70°C environ.

4. Procédé suivant la revendication 3, **caractérisé en ce qu'**on conduit l'étape (a) d'hydrogénation à une pression, dans le ciel gazeux de l'hydrogénateur, comprise entre 0,5 et 4 bars environ, de préférence entre 0,8 et 1,5 bars environ.

5. Procédé suivant l'une quelconque des revendications 1 à 4, **caractérisé en ce qu'**on produit par l'étape (c) une solution de peroxyde d'hydrogène dans l'eau à une concentration en peroxyde d'hydrogène comprise entre 5 et 12 % en poids.

## Claims

1. Process for producing hydrogen peroxide according to the technique of autooxidation of an anthraquinone derivative, of the type including:
- a stage (a) of catalytic hydrogenation, in a hydrogenator (1), of a working solution containing at least one anthraquinone derivative in solution in at least one organic solvent;
- after filtration (in 6) of the hydrogenated working solution, a stage (b) of oxidation, in an oxidizer (2), of this hydrogenated working solution by means of a fluid containing oxygen, especially by means of air;
- a stage (c) of separation, using water, in an' extractor (3), of the hydrogen peroxide and of the oxidized working solution; and
- a stage (d) of recycling to the hydrogenator of the oxidized working solution recovered in stage (c);
**characterized in that**:
- the hydrogenation stage (a) is conducted so as to obtain at the entry of the oxidizer (2) a hydrogen peroxide equivalent of approximately between 7 and 9 g/l, and
- the oxidation stage (b) is conducted counter-currentwise and at a temperature which, at the top of the oxidizer (2), is lower than approximately 50°C and is preferably approximately between 35 and 40°C,
- means for gas-liquid contact which consist at least partly of a corrugated-crisscross packing including a package of lamellae which have a rectangular overall shape and are obliquely corrugated, the direction of inclination of the corrugations being reversed from one lamella to the next, are employed in the oxidizer (2),
- and a solution of hydrogen peroxide in water at a hydrogen peroxide concentration lower than 15% by weight is produced by stage (c).

2. Process according to Claim 1, **characterized in that** the oxidation stage (b) is conducted at a pressure, in the top gas space of the oxidizer (2), of approximately between 1 and 10 bars, preferably approximately between 2 and 4 bars.

3. Process according to Claim 1 or 2, **characterized in that** the hydrogenation stage (a) is conducted at a temperature of approximately between 50 and 70°C.

4. Process according to Claim 3, **characterized in that** the hydrogenation stage (a) is conducted at a pressure, in the top gas space of the hydrogenator, of approximately between 0.5 and 4 bars, preferably approximately between 0.8 and 1.5 bars.

5. Process in accordance with any one of Claims 1 to 4, **characterized in that** a solution of hydrogen peroxide in water at a hydrogen peroxide concentration of between 5 and 12% by weight is produced by stage (c).

## Patentansprüche

1. Verfahren zur Herstellung von Wasserstoffperoxid durch Autooxidation eines Anthrachinonderivats, das die folgenden Schritte umfaßt:
- einen Schritt (a) der katalytischen Hydrierung einer Arbeitslösung, die eine Lösung mindestens eines Anthrachinonderivats in mindestens einem organischen Lösungsmittel enthält, in einem Hydriergefäß (1);
- nach Filtration (bei 6) der hydrierten Arbeitslösung einen Schritt (b) der Oxidation der hydrierten Arbeitslösung mittels eines Sauerstoff enthaltenden Fluids und insbesondere mit Luft in einem Oxidationsgefäß (2);
- einen Schritt (c) der Trennung von Wasserstoffperoxid und oxidierter Arbeitslösung in einem Extraktor (3) mit Wasser; und
- einen Schritt (d) der Rückführung der in Schritt (c) gewonnenen oxidierten Arbeitslösung zu dem Hydriergefäß,
**dadurch gekennzeichnet, daß**:
- der Hydrierungsschritt (a) so durchgeführt wird, daß am Einlaß des Oxidationsgefäßes (2) ein Äquivalent Wasserstoffperoxid im Bereich von etwa 7 bis 9 g/l liegt, und
- der Oxidationsschritt (b) im Gegenstrom bei einer Temperatur durchgeführt wird, die oben am Oxidationsgefäß (2) unter etwa 50 °C und vorzugsweise im Bereich von etwa 35 bis 40 °C liegt;
- in dem Oxidationsgefäß (2) Einrichtungen für den Kontakt Gas-Flüssigkeit verwendet werden, die zumindest zum Teil aus einem über Kreuz gewellten Füllkörper bestehen, der ein Bündel von Lamellen aufweist, die von allgemein rechteckiger Form und in Schrägrichtung gewellt sind, wobei die Neigungsrichtung der Wellen von einer Lamelle zur anderen umgekehrt ist, und
- in Schritt (c) eine Wasserstoffperoxidlösung in Wasser mit einer Wasserstoffperoxidkonzentration von unter 15 Gew.-% hergestellt wird.

2. Verfahren nach Anspruch 1, **dadurch gekennzeichnet, daß** der Oxidationsschritt (b) bei einem Druck des Oxidationsgefäßes (2) im Gasraum im Bereich von etwa 1 bis 10 bar und vorzugsweise etwa 2 bis 4 bar durchgeführt wird.

3. Verfahren nach Anspruch 1 oder 2, **dadurch gekennzeichnet, daß** der Hydrierungsschritt (a) bei einer Temperatur von etwa 50 bis 70 °C durchgeführt wird.

4. Verfahren nach Anspruch 3, **dadurch gekennzeichnet, daß** der Hydrierungsschritt (a) bei einem Druck des Hydriergefäßes im Gasraum von etwa 0,5 bis 4 bar und vorzugsweise etwa 0,8 bis 1,5 bar durchgeführt wird.

5. Verfahren nach einem der Ansprüche 1 bis 4, **dadurch gekennzeichnet, daß** in Schritt (c) eine Lösung von Wasserstoffperoxid in Wasser mit einer Wasserstoffperoxidkonzentration im Bereich von 5 bis 12 Gew.-% hergestellt wird.
